Europäisches Patentamt

(19) European Patent Office

Office européen des brevets

(11) Publication number: **0 289 280**
**A2**

# EUROPEAN PATENT APPLICATION

(12)

(21) Application number: 88303784.8

(22) Date of filing: 27.04.88

(51) Int. Cl.4: **B 60 T 8/00**

(30) Priority: 28.04.87 JP 105887/87

(43) Date of publication of application:
02.11.88 Bulletin 88/44

(84) Designated Contracting States: DE FR GB IT SE

(71) Applicant: **MIYAKO JIDOSHA KOGYO
KABUSHIKIGAISHA**
13-6, Nishishinbashi 2-chome Minato-ku
Tokyo (JP)

**WATANABE ENGINEERING KABUSHIKIGAISHA**
19-1, Takinogawa 2-chome Kita-ku
Tokyo (JP)

(72) Inventor: **Watanabe, Mamoru**
17-3, Kamiaoki 4-chome
Kawaguchi-shi Saitama-ken (JP)

Tai, Hiromi
Miyako Jidosha Kogyo Kabushikigaisha 13-6
Nishishinbashi 2-chome Minato-ku Tokyo (JP)

Saito, Kazuo
Miyako Jidosha Kogyo Kabushikigaisha 13-6
Nishishinbashi 2-chome Minato-ku Tokyo (JP)

Nagasawa, Akio
Kabushikigaisha Chikuma Seisakusho 15-1, Namikawa
3-chome Ooicho Kameoka-shi Kyoto (JP)

Mitsubayashi, Kazuhiko
Kabushikigaisha Chikuma Seisakusho 15-1, Namikawa
3-chome Ooicho Kameoka-shi Kyoto (JP)

(74) Representative: **Dealtry, Brian et al**
Eric Potter & Clarkson 14, Oxford Street
Nottingham NG1 5BP (GB)

(54) Liquid pressure control device for anti-lock brake.

(57) This liquid pressure control device for an anti-lock brake is
provided with a switch means (55) adapted to turn on a solenoid
valve means (34) in accordance with the movement of a driving
member (4) in the pressure reducing direction from a return
position to a position which is a certain distance away therefrom
or in the pressure increasing direction, and to turn off the
solenoid valve means (34) in accordance with the movement of
the driving member (4) in the pressure reducing direction
beyond the mentioned position which is a certain distance away
from the return position while a pressure-holding signal is
inputted from an anti-lock control circuit (73). The driving
member (4) is adapted to control a regulating valve (19) and a
liquid pressure control piston (5) during an anti-locking
operation so as to reduce or increase the braking liquid
pressure in accordance with on-off condition of the solenoid
valve means (34).

EP 0 289 280 A2

## Description

# LIQUID PRESSURE CONTROL DEVICE FOR ANTI-LOCK BRAKE

This invention relates to an improvement in a liquid pressure control device for an anti-lock brake which is used in the brake system for an automobile.

If the wheels are brake-locked during a braking operation by an excessively large braking force applied thereto relative to the grounding friction of the tires, the braking distance of the automobile increases, and the directional stability and steerability thereof are lost. This would incur danger.

In order to avoid this danger, a so-called anti-lock braking system has been practiced or proposed, which consists mainly of wheel speed sensors adapted to detect the rotational condition of the wheels, an anti-lock control circuit adapted to output a signal for reducing the braking liquid pressure according to acceleration (deceleration) data from said sensors and a holding signal for maintaining the same pressure, or be operated so as to stop the pressure-reducing signal and pressure-holding signal for the purpose of increasing the reduced or maintained braking liquid pressure, and a liquid pressure control device for an anti-lock brake, which is provided with a driving member adapted to be driven in the pressure reducing or increasing direction by a solenoid valve means turned on or off by an output signal from the anti-lock control circuit. In such a braking system, the supplying and discharging of a pressure liquid which is applied from a liquid pressure pump in a power steering device or from a special pump to the driving member in the liquid pressure control device for the anti-lock brake are controlled by turning on and off the solenoid valve means, to move a liquid pressure control piston which interlocks with the driving member. Due to the movement of the liquid pressure control piston, the communication of the braking liquid pressure from a master cylinder to a wheel cylinder is interrupted, and the volume of a liquid pressure control chamber connected to the wheel cylinder is increased or reduced at the same time, whereby the braking liquid pressure in the wheel cylinder is reduced, increased or maintained. The braking operation is thus carried out as the slip ratio between the tires and road surface is kept at an optimum level.

During a braking liquid pressure maintaining operation in this liquid pressure control device for the anti-lock brake, a pressure holding signal inputted from the anti-lock control circuit is inputted into the solenoid valve means through a switch means which is turned on or off in accordance with a pressure increasing or reducing movement of the driving member. While the pressure maintaining signal is inputted, the solenoid valve means is turned on and off depending upon the movement-responding speed of the driving member, to drive (subject to a hovering action) the driving member repeatedly in the pressure reducing and increasing directions. When the width corresponding to the quantity of movement of the driving member, i.e. the width of the pressure-maintaining zone has become large in the case where the braking liquid pressure is maintained in this width, fluctuation in the acceleration and deceleration of the automobile increases, or the consumption of the pressure liquid required to actuate the driving member also increases.

An object of the present invention is to provide a liquid pressure control device for an anti-lock brake which is capable of solving these problems and minimizing the width of the pressure maintaining zone during a braking liquid pressure maintaining operation.

According to the present invention, a switch means is provided, which is adapted to turn on a solenoid valve means in accordance with the movement of the driving member in the pressure reducing direction from a return position to a position which is a certain distance away therefrom or in the pressure increasing direction, and to turn off the solenoid valve means in accordance with the movement of the driving member in the pressure reducing direction beyond the mentioned position which is a certain distance away from the return position while a pressure-holding signal is inputted from the anti-lock control circuit, whereby, during a pressure maintaining operation, the direction of movement of the driving member is switched to immediately shift the solenoid valve means from an ON-state to an OFF-state or from an OFF-state to an ON-state. This enables the width of the pressure-maintaining zone in a braking liquid pressure maintaining operation to be minimized.

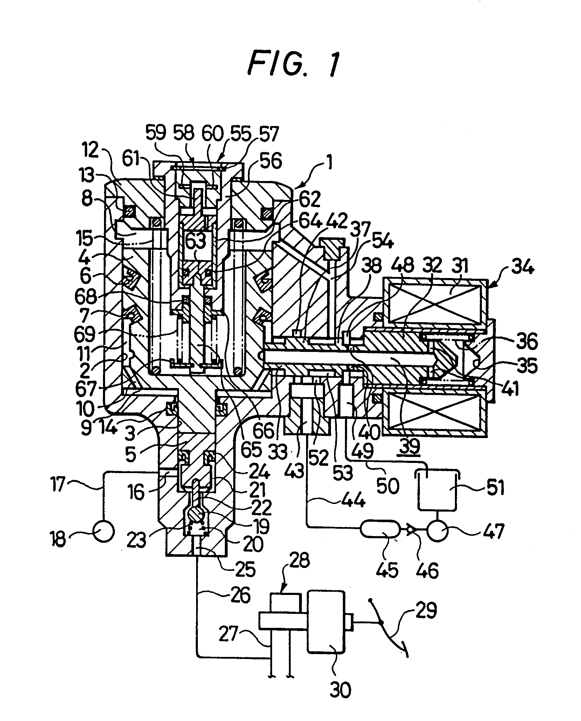

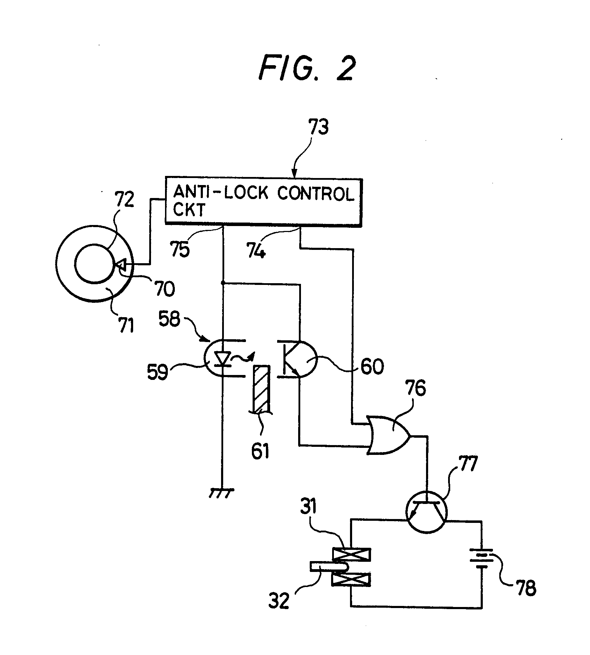

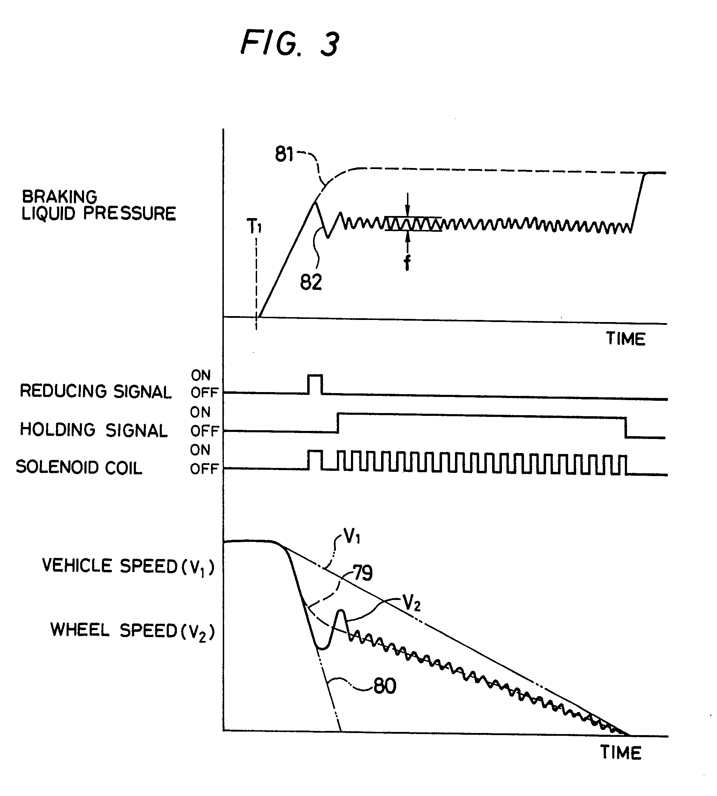

Reference is made to the drawings, in which Fig. 1 is a sectional view of an embodiment of the present invention; Fig. 2 an example of a circuit to which the embodiment of Fig. 1 is connected; and Fig. 3 a time chart illustrating the operation of each of the embodiment of Fig. 1 and example of Fig. 2.

A liquid pressure control device 1 for an anti-lock brake is provided inside with a differential pressure-responding cylinder 2 and a braking liquid pressure control cylinder 3, and a differential pressure-responding member 4 is inserted in the differential pressure-responding cylinder 2 so that the member 4 can be vertically moved. Under the differential pressure-responding member 4, a liquid pressure control piston 5 is inserted in the braking liquid pressure control cylinder 3 so that the piston 5 can be moved slidingly in the vertical direction.

Reference numerals 6, 7 denote annular seals provided on the differential pressure-responding member 4, and these seals 6, 7 define a first pressure chamber 8 formed on the upper side, and a second pressure chamber 11 which communicates constantly with a lower pressure chamber 9 via a passage 10.

The first pressure chamber 8 is sealed with a cover member 12 provided on the upper side thereof, and a seal 13, and the second pressure chamber 11 and lower prsssure chamber 9 with a seal 14 which slidingly contacts the outer circumferential surface of the liquid pressure control piston 5. A spring 15 is inserted between the cover member 12 and differential pressure-responding member 4, which is urged downward by this spring 15.

Under the liquid pressure control piston 5, a liquid pressure control chamber 21 is formed, which is connected at its one side to an end brake 18 via an output port 16 and a brake pipe 17, and at the other side to a valve chamber 20 via a regulating valve 19. While the brake is disengaged and in a normal braking operation, the regulating valve 19 is kept open due to the downwardly urging action of a pin 22 fixed to the liquid pressure control piston 5. Reference numeral 23 denotes a valve spring urging the regulating valve 19 in the opening direction, and 24 a seal.

The valve chamber 20 is connected to a tandem master cylinder 28 via an input port 25 and brake pipes 26, 27. Reference numeral 29 denotes a brake pedal, 30 a servomotor for promoting the stepping force applied to the brake pedal 29. A liquid pressure control device for an anti-lock brake, which is same as shown in Fig. 1, is connected as necessary between the tandem master cylinder 28 and another end brake (not shown).

A solenoid valve means 34 consisting mainly of a solenoid coil 31, a movable iron core 32 and a valve plunger 33 is fixed to the right side of the liquid pressure control device for an anti-lock brake 1.

The movable iron core 32 is movable by distance up to a right-hand stroke end 35. Reference numeral 36 denotes a spring urging the movable iron core 32 to a return position shown in the drawing. The valve plunger 33 has spool valves 37, 38 for switching the supplying and discharging of the pressure liquid applied to the differential pressure-responding member 4, and is formed integrally with the movable iron core 32. The left end portion of the valve plunger 33 projects into the second pressure chamber 11 so as to stop the upward movement of the differential pressure-responding member 4. Reference numerals 39, 40, and 41 denote passages formed in the valve plunger 33 and movable iron core 32; 42 a feed groove connected to the discharge side of a pump 47 via a feed port 43, a feed pipe 44, an accumulator 45 and a check valve 46; and 48 a discharge groove connected to the suction side of the pump 47 via a discharge port 49, a discharge pipe 50 and a tank 51. A feed port 52 provided next to the feed groove 42 is connected to the first pressure chamber 8 via a chamber 53, which is formed between the spool vlaves 37, 38, and via a passage 54.

A switch means 55 is attached to the cover member 12. In the switch means 55, a photointerrupter 58 is set by a clip 57 on the upper portion of a case 56 fixed to the cover member 12. Reference numeral 59 denotes a light-emitting portion of the photointerrupter, 60 a light-receiving portion thereof, and 61 a light-shielding member.

A sleeve 62 connected unitarily to the light-shielding member 61 is inserted in the case 56 so as to be vertically moved, and the light-shielding member 61 is supported on the sleeve 62 so that the upper end of the light-shielding member 61 is maintained in an ON-position which is as close as possible with respect to an ON-OFF change over line of the incident light from the light-emitting portion 59 to the light-receiving portion 60.

A slidable piece 63 is inserted in the sleeve 62. A slide ring 64 is provided on slidable piece 63 for providing sliding resistance between the inner surface of the sleeve 62 and the slidable piece 63. Accordingly, due to the slide ring 64, the slidable pieces 63 and sleeve 62 are moved unitarily in the vertical direction. After the shoulder portion of the light-shielding member 61 abuts against the housing of the photointerrupter 58, continued upward movement of the slidable piece 63 is permitted. Accordingly, the extent of movement of the slidable piece 63 becomes larger than that of the sleeve 62, and the relative position thereof can be varied.

A driven pin 65, which is positioned so that it can be driven in accordance with the movement of the differential pressure-responding member 4, is fixed to the lower portion of the slidable piece 63 through an upper retainer 66. Reference numeral 67 denotes a lower retainer, 68, a seal, and 69 a spring provided between the upper and lower retainers 66, 67 and urging the driven pin 65 and slidable piece 63 in the downward direction.

Fig. 2 is a circuit diagram showing an example of a circuit connected to the embodiment of Fig. 1. The parts of the circuit of Fig. 2 which are identical with those of the embodiment of Fig. 1 are designated by the same reference numerals.

Reference numeral 70 denotes a wheel speed sensor adapted to detect the rotational speed of a pulse gear 72 interlocking with a wheel 71, the sensor 70 being connected to an anti-lock control circuit 73 so that a signal from the sensor 70 can be inputted into the circuit 73.

The anti-lock control circuit 73 is adapted to process the acceleration (deceleration) data inputted from the wheel speed sensor. When brake locking nearly occurs during a braking operation, a pressure reducing signal of a high level is outputted from a pressure reducing signal output terminal 74. When the braking liquid pressure is to be maintained, a pressure-holding signal of a high level is outputted from a pressure-holding signal output terminal 75.

The pressure reducing signal output terminal 74 of the anti-lock control circuit 73 is connected to one input terminal of an OR-gate 76, and the pressure-holding signal output terminal 75 to the light-emitting portion 59 and light-receiving member 60 of the photointerrupter 58. An output terminal of the light-emitting portion 59 is connected to the earth, and the output terminal of the light-receiving member 60 to the other input terminal of the OR-gate 76. The output terminal of the OR-gate 76 is connected to the base of a transistor 77 which is adapted to turn on and off the solenoid coil 31. Reference numeral 78 denotes a power source for the solenoid coil 31.

The operation of the embodiment shown in Figs. 1 and 2 will now be described with reference to the time chart of Fig. 3.

When the pump 47 is driven, the liquid in the tank 51 is pressurized thereby and supplied from the feed port 43 into the liquid pressure control device 1 for an anti-lock brake via the check valve 46, accumulator 45 and feed pipe 44. The pressurized liquid is further supplied to the first pressure chamber 8 via the feed port 52, chamber 53 and passage 54 to press the differential pressure-responding member 4 in the downward direction. The second pressure chamber 11 and lower pressure chamber 9 communicate with the tank 51 via the passages 39, 40, discharge groove 48, discharge port 49 and discharge pipe 50, and the feed groove 42 is closed with the spool valve 37. Accordingly, the differential pressure-responding member 4 is not moved up but retained in the illustrated position.

When the brake pedal 29 is stepped at the time $T_1$ during the travelling of the vehicle, a braking liquid pressure is generated in the tandem master cylinder 28 the operation of which is promoted by the servomotor 30. This braking liquid pressure is inputted into the liquid pressure control device 1 for an anti-lock brake via the brake pipes 27, 26 and input port 25, and further supplied to the end brake 18 via the valve chamber 20, liquid pressure control chamber 21, output port 16 and brake pipe 17. When the end brake 18 is operated, the wheel speed $V_2$ decreases with respect to the vehicle speed $V_1$, and a braking operation is carried out in accordance with the differential speed (slip ratio).

When the braking liquid pressure has become higher than a level corresponding to proper grounding friction of the tires, during the braking operation, the wheel speed $V_2$ separates from a proper deceleration line shown by a broken line 79 and decreases rapidly as shown by a one-dot chain line 80 toward the brake locking level (wheel speed of zero). This variation in wheel speed $V_2$ is inputted from the wheel speed sensor 70 into the anti-lock control circuit 73 and processed, and a pressure reducing signal of a high level is outputted from the pressure reducing signal output terminal 74 to one input terminal of the OR-gate 76.

Due to the pressure reducing signal, a high-level voltage is applied from the output terminal of the OR-gate 76 to the base of the transistor 77. When the transistor 77 is thus turned on, the solenoid coil 31 is excited by the power source 78. Owing to the excitation of the solenoid coil 31, the movable iron core 32 is moved with the valve plunger 33 to the right-hand stroke end 35 to release the differential pressure responding member 4. The spool valves 37, 38 is then moved to the feed change-over position. As a result, the feed groove 42 is opened and the feed port 52 is closed with the chamber 53 and discharge groove 48 communicating with each other at the same time.

When the feed groove 42 is thus opened, the pressure liquid from the pump 47 is supplied to the second pressure chamber 11 and lower chamber 9. Owing to the communication of the chamber 53 with the discharge groove 48, the pressure liquid supplied to the first pressure chamber 8 is released so as to be discharged to the tank 51. The pressure of the pressure liquid applied to the differential pressure-responding member 4 is then reversed, so that the differential pressure-responding member 4 is driven upward (in the pressure reducing direction) with the liquid pressure control piston 5 allowed to move up.

Owing to the movements of the differential pressure-responding member 4 and liquid pressure control piston 5, the regulating valve 19 is closed, and the input port 25 and the output port 16 are shut off from each other. At the same time, the volume of the liquid pressure control chamber 21 increases. Although the braking liquid pressure in the tandem master cylinder 28 continues to increase as shown by a broken line 81, the braking liquid pressure of the end brake 18 decreases as shown by a solid line 82, the wheel speed $V_2$ being reduced starts increasing, whereby the brake locking is avoided.

In accordance with the above-described upward movement of the differential pressure-responding member 4, the driven pin 65, lower retainer 67 and slidable piece 63 are moved up against the spring 69. Due to the movement of the slidable piece 63, the light-shielding member 61 is moved to the OFF-position, which is beyond the upper ON-OFF change-over line, via the sleeve 62.

The wheel speed $V_2$ is restored due to the operation for reducing the braking liquid pressure 82. When the wheel speed $V_2$ has exceeded the proper deceleration line 79, the pressure reducing signal is reversed to a low level by the anti-lock control circuit 73 to cause the transistor 77 to be turned off, and the solenoid coil 31 to be deexcited. Consequently, the movable iron core 32 and valve plunger 33 leave the stroke end 35, and are pushed back to left by the spring 36. When the closing of the feed groove 42 with the spool valves 37, 38, the opening of the feed port 52 and the discontinuing of the communication between the chamber 53 and discharge groove 48 then results, the pressure liquid is fed into the first pressure chamber 8, and the liquids in the second pressure chamber 11 and lower pressure chamber 9 are discharged to the tank 51, so that the differential pressure-responding member 4 is driven downward (in the pressure-increasing direction). During this time, the driven pin 65 and slidable piece 63 are drawn down by the spring 69, and the light-shielding member 61 is also moved with the sleeve 62 to the ON-position which is lower than the ON-OFF change-over line.

When the liquid pressure control chamber 21 is compressed via the liquid pressure control piston 5 in accordance with the downward (in the pressure increasing direction) movement of the differential pressure-responding member 4, the braking liquid pressure increases again, and the wheel speed $V_2$ decreases. When the wheel speed $V_2$ has decreased to the extent that the wheel speed $V_2$ crossed the proper deceleration line 79, the anti-lock control circuit 73 outputs a pressure-holding signal of a high level from the pressure-holding signal output terminal 75, so that the photointerrupter 58 is turned on.

The on-state output of the photointerrupter 58 is inputted into the second input terminal of the OR-gate 76. When a high-level voltage is applied from the output terminal of the OR-gate 76 to the base of the transistor 77, the transistor 77 is turned on, and the solenoid coil 31 is thereby excited. Consequently, the differential pressure-responding member 4 is moved up (in the pressure reducing direction), and the reduction in the braking liquid pressure 82 is done in the same manner as the previously-mentioned pressure reducing operation.

When the driven pin 65 is moved up in accordance with the upward (in the pressure reducing direction) movement of the differential pressure-responding member 4, the photointerrupter 58 is turned off immediately, and the output from the OR-gate 76 is reversed to a low level, the solenoid coil 31 being deexcited in accordance with the stoppage of the operation of the transistor 77. Due to the deexcitation of the solenoid coil 31, the differential pressure-responding member 4 is moved down (in the pressure increasing direction), and the braking liquid pressure 82 is increased in the same manner as in the above-mentioned pressure increasing operation. The photointerrupter 58 is turned on immediately in accordance with the downward movement of the light-shielding member 61.

While the pressure holding signal is inputted, the on-state output or off-state output of the photointerrupter 58 is switched immediaately as mentioned above every time the upper end portion of the light-shielding member 61 passes the ON-OFF change-over line. However, the differential pressure-responding member 4 has a mechanical response delay due to the time of operation of the movable iron core 32 and the time for supplying and discharging the pressure liquid to and from the first and second pressure chambers 8, 11 and lower pressure chamber 9. Therefore, the differential pressure-responding member 4 is driven vertically within the width of movement, which corresponds to this response delay, i.e. the width f of the pressure-maintaining zone. Accordingly, the quantity of the vertical movement of the differential pressure-responding member 4 occurs due to the mechanical response delay, and the quantity of movement thereof required for the reversing of the on-state output and off-state output of the photointerrupter 58 is not added to the quantity of the vertical movement of the differential pressure-responding member 4. This enables the width f of the pressure-maintaining zone to be reduced.

When the wheel speed V₂ deviates from the proper deceleration line 79 due to the variation of the road surface condition, a pressure-reducing signal is outputted from the anti-lock control circuit 73 on the basis of the acceleration (deceleration) data from the wheel speed sensor 70 to further reduce the braking liquid pressure, or increase the braking liquid pressure by setting the pressure-reducing signal and pressure-holding signal to low levels. Thus, the braking liquid pressure is regulated each time.

The present invention is not limited to the illustrated embodiment. For example, the photointerrupter 58 used for the switch means 55 can be substituted by some other optical switch, a magnetic switch or a limit switch. While the pressure liquid is supplied to the first pressure chamber 8 and the second pressure chamber 11 and lower pressure chamber 9 alternately by the spool valves 37, 38, the feeding and discharging of the pressure liquid may be done at the second pressure chamber 11 and lower pressure chamber 9 only with the first pressure chamber 8 pressed constantly in the downward direction by an elastic member. The differential pressure-responding member 4 and liquid pressure control piston 5 can be integrally formed. The differential pressure-responding member 4, which is adapted to be driven by the pressure liquid, can also be driven by other kind of fluid pressure, such as compressed air.

**Claims**

1. A liquid pressure control device for an anti-lock brake, having a solenoid valve means adapted to be turned on when a signal for reducing the braking liquid pressure is inputted from an anti-lock control circuit thereinto, a regulating valve (19) adapted to control the supplying of the braking liquid pressure from a master cylinder to a wheel cylinder by intermittent operation, a liquid pressure control piston (5) adapted to be moved so as to reduce or increase the braking liquid pressure to said wheel cylinder, and a driving member (4) adapted to be driven in the pressure reducing direction or pressure increasing direction in accordance with on-off condition of said solenoid valve means during an anti-lock operation so as to close or open said regulating valve and move said liquid pressure control piston characterised by switch means responsive to movement of the driving member in the pressure increasing or pressure decreasing directions, the switch means being operable whilst the pressure hold signal is produced by the control circuit to repeatedly switch the solenoid valve means on and off to cause reversal in direction of movement of the driving member.

2. A liquid pressure control device for an anti-lock brake, having a solenoid valve means adapted to be turned on when a signal for reducing the braking liquid pressure is inputted from an anti-lock control circuit thereinto, a regulating valve (19) adapted to control the supplying of the braking liquid pressure from a master cylinder to a wheel cylinder by intermittent operation, a liquid pressure control piston (5) adapted to be moved so as to reduce or increase the braking liquid pressure to said wheel cylinder, and a driving member (4) adapted to be driven in the pressure reducing direction or pressure increasing direction in accordance with on-off condition of said solenoid valve means during an anti-lock operation so as to close or open said regulating valve and move said liquid pressure control piston characterised by comprising a switch means adapted to turn on said solenoid valve means in accordance with the movement of said driving member in the pressure reducing direction from a return position to a position which is a certain distance away therefrom or in the pressure increasing direction, and to turn off said solenoid valve means in accordance with the movement of said driving member in the pressure reducing direction beyond the mentioned position which is a certain distance away from said return position while a pressure holding signal is inputted from said anti-lock control circuit into said liquid pressure control device.

3. A liquid pressure control device for an anti-lock brake according to Claim 1 or 2, wherein said solenoid valve means consists of a solenoid coil, a movable iron core adapted to be moved when said solenoid coil is energized, and a valve plunger adapted to be moved with said movable iron core and to switch the operations for supplying and discharging a pressure liquid, which is applied to said driving member, from one to the other.

4. A liquid pressure control device for an anti-lock brake according to Claim 1, 2 or 3 wherein said driving member consists of a differential pressure-responding member, which is disposed in a differential pressure-responding cylinder so that said differential pressure-responding member is driven therein in accordance with a difference between pressures in two pressure chambers formed on the front and rear sides of said differential pressure responding member.

5. A liquid pressure control device for an anti-lock brake according to Claim 1, 2, 3, or 4 wherein said switch means consists of a light-emitting portion, a light receiving portion, and a light-shielding member provided movably between said light emitting portion and said light-receiving portion.

6. A liquid pressure control device for an anti-lock brake according to Claim 5 wherein the free end portion of said light-shielding member is disposed in an ON-position which is close to an ON-OFF change-over line for the incident light from said light-emitting portion to said light-receiving portion.

7. A liquid pressure control device for an anti-lock brake according to Claim 6, wherein said light-shielding member is connected to said driving member so as to be moved interlockingly with said driving member up to an OFF-position which is beyond said ON-OFF change-over line for the incident light from said light-emitting portion to said light-receiving portion, but not moved in said OFF-position in spite of the movement of said driving member in the pressure reducing direction.

8. A liquid pressure control device for an anti-lock brake according to Claim 7, wherein said light-shielding member is connected unitarily to a sleeve, a slidable member being inserted in said sleeve so as to move slidingly therein with a predetermined sliding resistance, and a driven pin which is adapted to be moved in accordance with the movement of said driving member being connected to said slid-

able member.

0289280

FIG. 1

## FIG. 2

0289280

# FIG. 3